# EUROPEAN PATENT SPECIFICATION

(11) **EP 3 252 450 B1**
(45) Date of publication and mention of the grant of the patent: **06.11.2024**
(21) Application number: 16020215.6
(22) Date of filing: 03.06.2016
(51) Int. Cl.: G01M 3/32

(54) **INSPECTION DEVICE FOR FLUID CIRCULATION CIRCUITS**
ÜBERFRÜFUNG VORRICHTUNG FÜR FLUID ZIRKULATIONSKREISLAUF
ÉQUIPEMENT D'INSPECTION DE CIRCUITS DE CIRCULATION DE FLUIDES

(43) Date of publication of application: 06.12.2017
(73) Proprietor: BBE, LDA, Marinha Grande (PT)
(72) Inventor: Rodrigues Ramos, Carina Alexandra, 2405-026 Maceira LRA (PT)
(74) Representative: Pereira da Cruz, Joao

(56) References cited:
- US-A- 5 466 271
- US-A- 5 820 646
- US-A1- 2015 135 803
- US-A1- 2016 101 491
- US-B1- 8 534 120
- US-B2- 9 613 413

## Description

### Technical field of the invention

The present invention relates to a process of flow rate test that is performed by an inspection device for fluid circulation circuits, and its main objective is to assist and improve the use of circuits in a given application, namely the assembly and validation of molds for plastic injection.

In a general way, this invention allows circuit diagnosis, which results in the optimization of the associated execution times and thus promotes the sustainability of the process.

In the state-of-the-art of the invention no solution was found in which the control of a circuit system, for instance in refrigeration systems, could significantly reduce the time associated to its production and validation. In fact, the present invention allows identifying problems in circuits in an earlier stage, thus significantly reducing their impact on the entire project.

Examples of methods and systems for testing circuits, constituting state-of-the-art, are given in patent documents US8534120, US2015/135803 and US2016/101491. US2016/101491 discloses a flow rate test of a pipe where the sensors are located around said pipe away from the rest of the test system .

### General description of the invention

The present invention relates to a process of flow rate test according to claim 1, that is performed using an inspection device for fluid circulation circuits.

The inspection device comprises five functional modules:
1. user interface module;
2. hydraulic module;
3. electrical switchboard module;
4. filtering module; and
5. frame module.

The user interface module (1) has a unique feature, as it was developed and specifically dimensioned for this device and for the functionalities it should incorporate, thus allowing the user to interact with the device in an easy and intuitive form.

The hydraulic module (2) includes all the physical components that make possible the inspection test, since all the actions set in the various regulation and control algorithms turn into actions in this module, having a direct contact with the circuit under test.

The electrical switchboard module (3) enables the power supply to all components, including the hydraulic module and the user interface module. On the other hand, it also performs all the management of digital and analog signals, in order to allow the device operability.

The filtering module (4) is considered as a "protective shield" of the device, since it filters and stores any debris which may be inside the circuit under test and, if not filtered, can damage the components of the hydraulic module.

All these modules and components are fixed to the frame module (5), which gives the device its physical and visual form.

In addition to performing the flow rate test with gas or liquid, object of the present invention, the inspection device allows performing several other types of inspection, including:
- tightness test with gas or liquid;
- cleaning; and
- descaling of circuits, with and without pressure.

The tightness test checks the circuits in order to verify if leaks exist inside it, i.e. checks its tightness. To carry out the inspection it is necessary to connect the circuit under test to the device, wherein this connection can be made using hoses. After connecting the circuit to the device in order to obtain a closed-loop circuit for fluid circulation, all the conditions are fulfilled to perform the inspection.

The inspection process begins when the device fills the circuit with the inspection fluid. Once the circuit is filled, the device pressurizes the circuit, closes it and monitors its response for a certain period of time through the data provided by the integrated pressure sensors. The duration of the circuit monitoring is programmable and can be adjusted to the user needs.

After monitoring the circuit, a technical inspection report is issued, in which the real and instantaneous reading obtained during the inspection is registered.

In order to protect the device and facilitate the user operation, the inspection device incorporates the selfcleaning capability of the circuit, either before or after the inspection test, aiming to protect the device and at the same time providing security and confidence to the user.

In order to improve the effectiveness of the inspection process, a pre-inspection with air is accomplished at an earlier stage of the test using compressed air, as a way of identifying large leaks before having liquid flow into the circuit:
- if a leak is identified at this early stage of the inspection, the test is stopped and the device issues an alert message reporting that problems exist in the circuit;
- if no anomalies are found in the circuit during the pre-inspection stage with air, either regarding leakages or obstructions, the device automatically changes to the inspection stage with fluid and, at the end, a performance report is issued whether a malfunction was detected or not.

Both the pre-inspection and the inspection stages result of a logical algorithm of interaction among pressure sensors, flow rate sensors, circulation pumps, servo-controlled solenoid valves, connections to the compressed air circuit, control module, user interface module, inspection liquid tanks and filtering module.

In addition to imposing the inspection fluid flow in the circuit, the flow rate test also allows identifying possible leaks and internal constrictions. This test can be carried out at a standard pressure, a user-defined pressure, or the circuit pressure can simply be monitored for a desired flow rate, depending on the user intents. It must be noted that this test can be made after the tightness test or in an isolated mode.

At an initial stage, a cleaning of the circuit that will be inspected is made and if no malfunction is found, either a leak or obstruction, the test proceeds to the inspection stage. In the inspection stage, the pressure is automatically adjusted to the test setting and both values of pressure and flow rate circulating inside the circuit are monitored.

Unlike the prior test and although a closed circuit is used, the fluid can circulate freely inside it in order to verify the maximum flow rate allowed in the channel. The inspection is automatically carried out by monitoring the signals from the sensors that are integrated in the device and by converting those signals into graphical form, thus generating the contents of the technical report created by the device.

In the same way as in the flow rate test, which results from a logical algorithm of interactions among the several components of the device, this type of test also uses a logical algorithm that differs from the former only in the interaction and component control.

As a complementary feature, the inspection device automatically generates in real time a report in which the response of the circuit is recorded, thus allowing reducing costs and unexpected events associated with leakage. In each test, depending on the type of test selected by the user, the control module acquires the signals received by the device sensors and recorded in a database and, at the end of each test, processes the received information and converts it into a report, which allows exporting the information resulting from the test. The sensor monitoring is performed and recorded in real time and instantaneously, without any direct user intervention. After the report is created by the database, it will be available for displaying in the screen of the user interface module and for exporting either to a removable storage device or by email.

The inspection device is also suitable for cleaning and protecting circuits against corrosion. In fact, the fluid used in the inspection device contains a rust inhibitor component in order to protect the circuit by coating its walls with a protective layer. Simultaneously, it is possible to change the inspection fluid to a fluid with a descaling component, which allows cleaning the circuit and removing any possible scaling formed inside it. Such cleaning can be done with or without pressure.

The main features of the inspection device can be highlighted as follows:
1) inspection of circuits for fluid circulation (identifying leaks, flagging the leaks with the color of the fluid);
2) performing tightness tests (pre-programmed or according to the user intents);
3) possibility of testing various circuits simultaneously or separately, due to the easy connection between the circuit under test and the device. This simplicity of connection allows coupling fluid distribution devices in order to allow testing several circuits automatically, either sequentially or in isolated mode;
4) monitoring the pressure, flow rate and temperature variations throughout the process by means of instantaneous reading and recording of digital and analog signals which are obtained during the tests;
5) graphic visualization of the instantaneous reading in the user interface screen, which shows the instantaneous measurement of sensors signal;
6) adjusting the flow rate in order to achieve the desired value of pressure in the circuit, which is provided by the control algorithm specifically developed for the present device;
7) cleaning and protection of the circuit after the inspection test;
8) ability to operate in automatic or manual mode, allowing the user to define inspection/control tests - such as tightness tests, flow simulations and validation, verification of circuit response when subjected to pressure, circuit clearing, among many others - adjusted to the user requirements. The change from manual to automatic modes and vice versa is done by the user whenever he finds it necessary. However, this operation is only allowed to a user with an advanced level of permission in order to ensure the viability of the inspection. A normal user does not have access to the manual operation mode. When the device is operating in automatic mode only the options of tightness test, pre-defined flow rate test and self-calibration are available to the operator. However, the user has the possibility to parameterize the tests. In manual mode, the user has the possibility to control all the components directly and perform an user defined test. In this operation mode, the operator besides controlling directly the device also has the possibility of setting the test parameters (pressure, time and flow rate).

The main advantages of the inspection device are now referred:
- easy assembly; the device has standard accessories of easy coupling, which facilitates the connection of the circuit under test to the device, in order to create a closed-loop circuit for inspection fluid circulation. Spare parts also have an easy coupling system to facilitate their replacement;
- easily transportable (portability);
- two options of operation mode (manual and automatic);
- allowing the user to program the inspection or cleaning tests that intends to accomplish, through the parameterization of tests (pressure, flow rates and time) or operating in manual mode;
- allow filling the inspection liquid tank (13) without removing it from the device. The tank (13) is located inside the device and has a filling system which connects it to the outside, so that the user can fill the tank (13) without moving it. Outside the device there is an aperture which allows to drain the inspection liquid into the tank (13), flowing through a pipe from the outside aperture to the inside of the tank (13);
- allowing to detect the fluid level/amount in the inspection liquid tank (13). This detection is carried out by reading the digital output signals of the level sensors (8) positioned in the tank (13), aiming to detect and inform the user on the amount of water inside it. Minimum and maximum security thresholds are set which, when triggered, allow displaying an alarm message in a user interface screen in order to inform the user that the tank (13) is already full or, by the contrary, there is no inspection liquid inside the tank (13);
- additional use of colored fluids to help identifying leaks;
- allow setting if the test will be performed on circuits with or without obstructions (set pressure protection);
- having light indicators (28) indicative of operation, which are placed in the upper part of the inspection device in order to be visible by the user. These light indicators (28) consist of flags placed in the upper part of the device, in a user interface area, and indicate the operation state of the device. Green color is used to indicate that the device is on, i.e. receiving electric current. Red color is used to indicate that a test is in progress and/or the circuit may be under pressure;
- incorporation of gas connection, allowing cleaning the circuit after the test is terminated, or perform the inspection test with a gas (e.g. air). The device has in its exterior an easy coupling connection which allows connecting it to a compressed air network or generator, in order to use this air whenever necessary for its operation. The device is ready to receive compressed air or other gases;
- performing an internal initial pre-test in order to ensure the correct performance of the device. It has a pre-defined self-calibration test which can be accomplished whenever the user wants. This test is a logical algorithm which checks if all the components of the device are responding within the factory calibration parameters and issues information alerts to the user if malfunctions are detected, so that the user can solve the problem or contact the technical assistance;
- switching the device on/off;
- automatic locking in case of malfunction (device controller). Whenever an inspection test is started, a constant monitoring is being made of both the device and circuit, and if one of the algorithm premises fails the anomaly is evaluated by the control algorithm and classified as failure or malfunction. In case of malfunction, an alarm is emitted to the user with the occurrence and, simultaneously, the action under progress and therefore the device are stopped;
- allowing emergency stop (emergency push button). There is an easily accessible emergency push button in the upper part of the device, in the user interface area, which can be actuated as emergency component. This component has the function of switching off the power supply to the device, which means that the device turns off completely when this component is actuated;
- issuing real-time reports describing the instantaneous response of the circuit under test.

Complementarily, the inspection device allows adding information about the circuit under test and about the project to which the circuit belongs.

### Brief description of the figures

### Reference numbers identification:

- (1): User interface module;
- (2): hydraulic module;
- (3): electrical switchboard module;
- (4): filtering module;
- (5): Frame module;
- (6): hardware (interface screen);
- (7): servo-controlled solenoid valve;
- (8): level sensor;
- (9): pressure sensor;
- (10): temperature sensor;
- (11): flow rate sensor;
- (12): internal filter;
- (13): inspection liquid tank;
- (14): hydraulic pump;
- (15): monitoring and control unit of the device;
- (16): power supply;
- (17): electrical components for power transmission;
- (18): electronic components for logic and communication processing;
- (19): electronic protection components;
- (20): signal processing components;
- (21): power supply to the hydraulic module components;
- (22): filter of medium/large sized particles;
- (23): filter of small sized particles;
- (24): structural frame;
- (25): outer plates;
- (26): emergency push button;
- (27): on/off button;
- (28): light indicators;
- (29): power supply plug;
- (30): moving wheels.

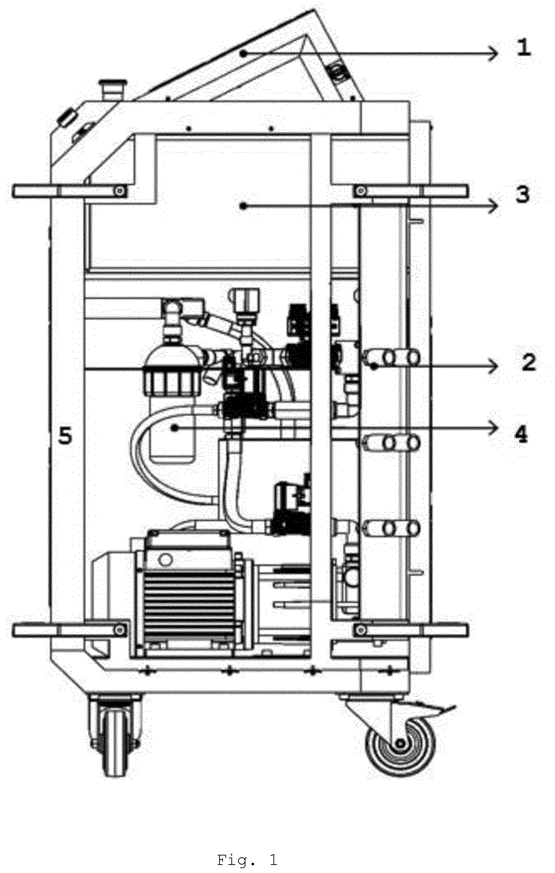

Figure 1: Schematic representation of the inspection device, wherein (1) is the user interface module, (2) is the hydraulic module of the device, (3) is the electrical switchboard module, (4) is the filter module and (5) is the frame module.

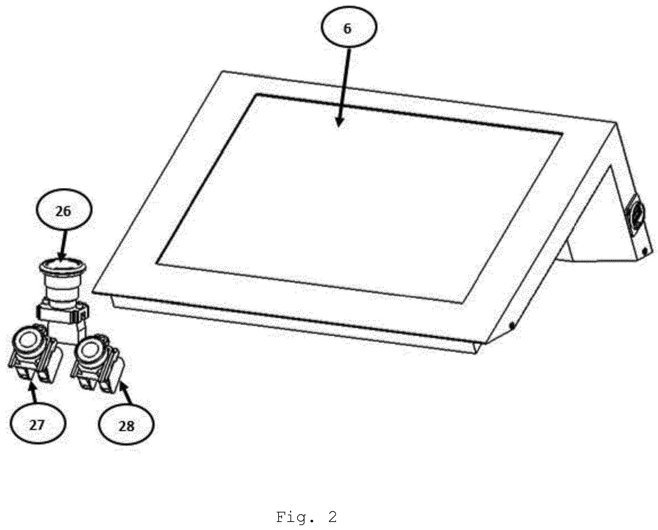

Figure 2: Schematic representation of the user interface module of the inspection device, wherein (6) is the hardware, (26) is the emergency push button, (27) is the on/off button and (28) is the light indicators.

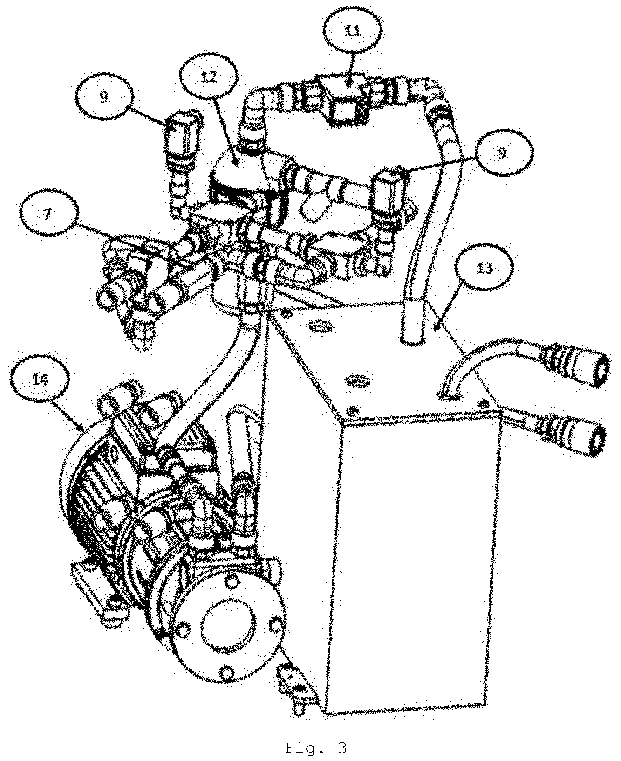

Figure 3: Schematic representation of the hydraulic module (2) of the inspection device, wherein (7) is the servo-controlled solenoid valve, (9) is the pressure sensor, (11) is the flow rate sensor, (12) is the internal filter, (13) is the inspection liquid tank and (14) is the hydraulic pump.

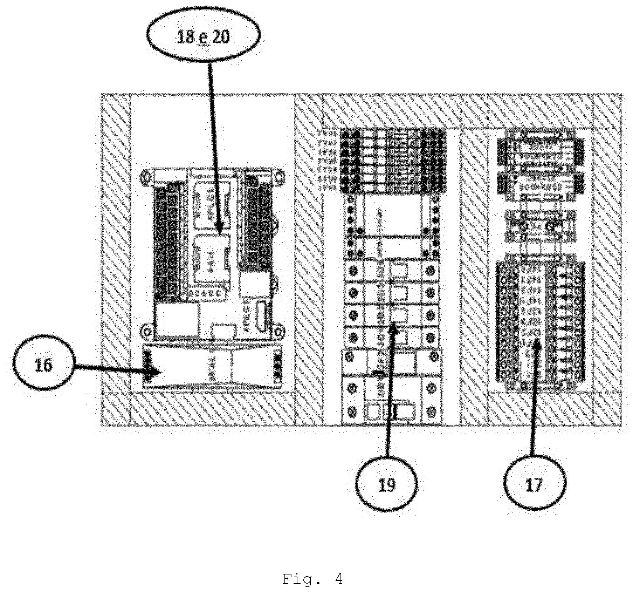

Figure 4: Schematic representation of the electrical switchboard module (3), wherein (16) is the power supply to the controller, (18 and 20) are the electronic components for logic, communication and signal processing, (17) are electrical components for power transmission and (19) are the electronic protection components.

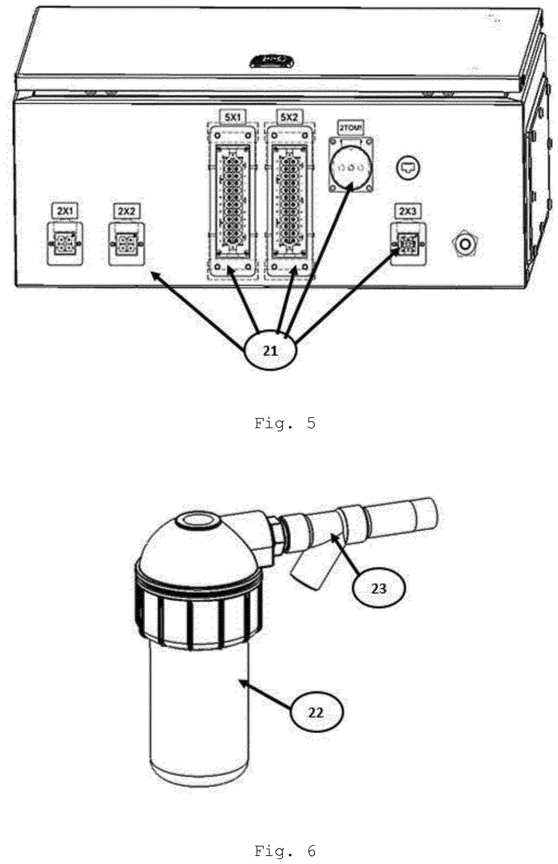

Figure 5: Representation of the power supply (21) to the hydraulic module (2) components.

Figure 6: Schematic representation of the filtering module (4) of the inspection device, wherein (22) is the filter of medium/large sized particles and (23) is the filter of small sized particles.

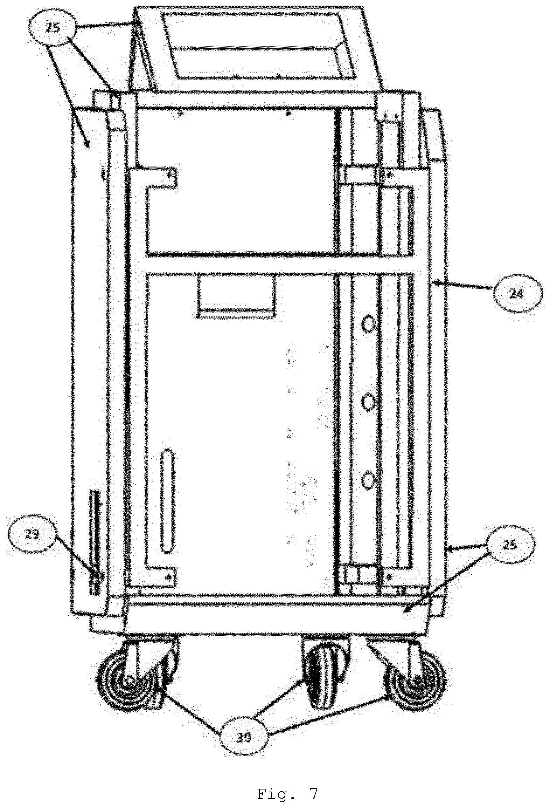

Figure 7: Schematic representation of the device frame module (5), wherein (24) is the structural frame, (25) are the outer plates, (29) is the power supply plug and (30) are the moving wheels.

### Detailed description of the invention

The present invention relates to a process of flow rate test to be performed by an inspection device for fluid circulation circuits, which is modular and comprises five main operation modules, namely:
- user interface module (1);
- hydraulic module (2);
- electrical switchboard module (3);
- filtering module (4); and
- frame module (5).

The user interface module (1) comprises the hardware (6) that allows interaction with the user, namely operation of the inspection device, connection with external communication networks or with external data storage devices. The communication algorithm between the user and the control part of the device is installed in the database of this hardware (6).

The hydraulic module (2) includes all the components that promotes the fluid circulation inside the inspection device, and allows accomplishing the inspection in a controlled manner according with what has been set by the user at the user interface module (1). It consists of servo-controlled solenoid valves (7), and level (8), pressure (9), temperature (10) and flow rate (11) sensors, internal filter (12), inspection liquid tank (13) and hydraulic pump (14). The tank (13) is located inside the inspection device and has a filling system which connects it to the outside, in order to enable the user to fill the tank (13) without moving it. All these components are controlled by the control algorithm included in the electrical switchboard module (3), where the actuation sequence of the components is set and where the user instructions are executed.

The electrical switchboard module (3) is the module of the inspection device which includes all the monitoring and control part (15) of the device, as well as its power supply. It includes the power supply (16), electrical components for power transmission (17), electronic components for logic and communication processing (18), electronic protection components (19), digital and analog signal processing components (20), power supply (21) to the hydraulic module (2) components. The conversion and calibration algorithm of an analog input to the physical quantity is processed by the processing electronic components (18) located in this module (3), which make the device operable.

The inspection device further includes a filtering module (4) of the inspection liquid. The filtering module is a replacement module located inside the device whose main function is filtering the fluid used in the inspection test, as well as protecting the components of the device, in order to ensure the absence of debris which may damage it in the medium term. The filter module (4) comprises a filter for medium/large sized particles (22) and a filter for small sized particles (23).

The frame module (5) is the module which support all other modules (1, 2, 3, 4), shaping the inspection device. It comprises an internal structural frame (24) and a set of outer plates (25) which creates its visual aspect. The frame module (5) is the attachment structure for all the interaction components with the user, namely the hardware (6) which preferably is an interface screen, emergency push button (26), on/off button (27), light indicators (28), plug of the device external power supply (29) and moving wheels (30) .

A rigorous circuit inspection will certainly be welcomed by the industry, as it represents an increase of productivity and quality of production processes.

## Claims

1. Process of flow rate test performed by an inspection device for fluid circulation circuits; the inspection device comprising:
- A user interface module (1), comprising a hardware (6) configured to provide interaction with a user for operating the device; a connection with external communication networks or with external data storage devices;
- A hydraulic module (2), which includes all the components that promote fluid circulation inside the device in order to accomplish inspection in a controlled manner according to what has been set by the user at the user interface module (1); the hydraulic module (2) consisting of the following components: servo-controlled solenoid valves (7), and level (8), pressure (9), temperature (10) and flow rate (11) sensors, internal filter (12), inspection liquid tank (13) and hydraulic pump (14); the inspection liquid tank (13) being located inside the inspection device and having a filling system which connects it to the outside;
- An electrical switchboard module (3), which includes a power supply (16), electrical components for power transmission (17), electronic components for logic and communication processing (18), electronic protection components (19), digital and analog signal processing components (20) and power supply (21) to the hydraulic module components; the electrical switchboard module (3) being further configured to execute a control algorithm adapted to control the components of the hydraulic module (2) according to an actuation sequence and to user instructions;
- A filtering module (4), which comprises a filter for medium/large sized particles (22) and a filter for small sized particles (23);
- A frame module (5), adapted to support the user interface module (1), the hydraulic module (2), the electrical switchboard module (3) and the filtering module (4); it comprises an internal structural frame (24) and a set of outer plates (25), and within which the hardware (6), emergency push button (26), on/off button (27), light indicators (28), plug of the device power supply (29) and moving wheels (30) are incorporated;
and the process being **characterized by** the following steps:
a) cleaning of a circuit to be inspected, followed by an inspection stage if no anomalies are found, neither leaks nor clogging;
b) adjustment of a pressure value to an inspection test setting;
c) monitoring both pressure and flow rate values of a fluid circulating inside the circuit;
d) acquisition of the signals received by the device sensors and recorded in a database;
e) information processing;
f) automatic and real-time generation of a report.

2. Process according to claim 1, wherein the fluid circulates freely inside the circuit.

## Patentansprüche

1. Prozess zur Prüfung der Durchfluss durch eine Prüfgerät für Flüssigkeitszirkulationskreisläufe; das Prüfgerät umfasst:
- Ein Benutzerschnittstellenmodul (1), das eine Hardware (6) umfasst, die so konfiguriert ist, dass sie eine Interaktion mit einem Benutzer zur Bedienung des Geräts ermöglicht; eine Verbindung mit externen Kommunikationsnetzen oder mit externen Datenspeichergeräten;
- Ein Hydraulikmodul (2), das alle Komponenten enthält, die die Flüssigkeitszirkulation im Inneren des Geräts fördern, um die Prüfung auf kontrollierte Weise gemäß den Einstellungen des Benutzers am Benutzerschnittstellenmodul (1) durchzuführen; das Hydraulikmodul (2) besteht aus den folgenden Komponenten: servogesteuerte Magnetventile (7), und Füllstands- (8), Druck- (9), Temperatur- (10) und Durchflusssensoren (11), Innenfilter (12), Prüfflüssigkeitstank (13) und Hydraulikpumpe (14); der Prüfflüssigkeitstank (13) befindet sich im Inneren der Prüfgerät und verfügt über ein Füllsystem, das ihn mit der Außenwelt verbindet;
- Ein elektrisches Schalttafelmodul (3), das eine Stromversorgung (16), elektrische Komponenten für Leistungsübertragung (17), elektronische Komponenten für Logik- und Kommunikationsverarbeitung (18), elektronische Schutzkomponenten (19), digitale und analoge Signalverarbeitungskomponenten (20) und eine Stromversorgung (21) für die Komponenten des Hydraulikmoduls umfasst; wobei das elektrische Schalttafelmodul (3) ferner so konfiguriert ist, dass es einen Steueralgorithmus ausführt, der so angepasst ist, dass er die Komponenten des Hydraulikmoduls (2) gemäß einer Betätigungssequenz und gemäß Benutzeranweisungen steuert;
- Ein Filtermodul (4), das einen Filter für mittelgroße/große Partikel (22) und einen Filter für kleine Partikel (23) umfasst;
- Ein Rahmenmodul (5), das geeignet ist, das Benutzerschnittstellenmodul (1), das Hydraulikmodul (2), das elektrische Schalttafelmodul (3) und das Filtermodul (4) zu tragen; es umfasst einen inneren strukturellen Rahmen (24) und einen Satz äußerer Platten (25), und in dem die Hardware (6), Notfalldruckknopf (26), Ein/Aus-Knopf (27), Lichtanzeigen (28), Stecker der Geräte-Stromversorgung (29) und beweglichen Räder (30) eingebaut sind;
und der Prozess ist durch die folgenden Schritte gekennzeichnet:
a) Reinigung eines zu überprüfenden Kreislaufs, gefolgt von einer Prüfphase, wenn keine Anomalien, weder Lecks noch Verstopfungen, festgestellt werden;
b) Anpassung eines Druckwertes auf eine Prüfeinstellung;
c) Überwachung der Druck- und Durchflusswerte einer im Kreislauf zirkulierenden Flüssigkeit;
d) Erfassung der von den Gerätesensoren empfangenen und in einer Datenbank gespeicherten Signale;
e) Informationsverarbeitung;
f) automatische und Echtzeit-Generierung eines Berichts.

2. Prozess nach Anspruch 1, wobei die Flüssigkeit innerhalb des Kreislaufs frei zirkuliert.

## Revendications

1. Procédé de test de débit effectué par un dispositif d'inspection pour les circuits de circulation des fluides ; le dispositif d'inspection comprenant :
- Un module d'interface utilisateur (1), comprenant matériel informatique (6) configuré pour fournir une interaction avec un utilisateur pour actionner le dispositif ; une connexion aux réseaux de communication externes ou aux dispositifs externes de stockage de données ;
- Un module hydraulique (2), lequel comprend tous les composants favorisant la circulation des fluides à l'intérieur du dispositif afin d'effectuer l'inspection de manière contrôlée en fonction des paramètres définis par l'utilisateur sur le module d'interface utilisateur (1) ; le module hydraulique (2) étant composé des éléments suivants : électrovannes servocommandées (7), capteurs de niveau (8), de pression (9), de température (10) et de débit (11), filtre interne (12), réservoir de liquide d'inspection (13) et pompe hydraulique (14); le réservoir de liquide d'inspection (13) étant situé à l'intérieur du dispositif d'inspection et doté d'un système de remplissage qui le relie à l'extérieur ;
- Un module de tableau de distribution électrique (3), lequel comprend une prise de courant (16), des composants électriques pour la transmission de courant (17), des composants électroniques pour le traitement de la logique et de la communication (18), des composants de protection électronique (19), des composants de traitement des signaux numériques et analogiques (20) et une prise de courant (21) des composants du module hydraulique ; le module de tableau de distribution électrique (3) étant en outre configuré pour exécuter un algorithme de contrôle adapté pour contrôler les composants du module hydraulique (2) en fonction d'une séquence d'actionnement et d'instructions de l'utilisateur ;
- Un module de filtrage (4), lequel comprend un filtre pour les particules de taille moyenne/grande (22) et un filtre pour les particules de petite taille (23) ;
- Un module cadre (5), adapté pour supporter le module d'interface utilisateur (1), le module hydraulique (2), le module de tableau de distribution électrique (3) et le module de filtrage (4) ; il comprend un cadre structurel interne (24) et un ensemble de plaques extérieures (25), où sont incorporés le matériel informatique (6), le bouton-poussoir d'urgence (26), le bouton marche/arrêt (27), les indicateurs lumineux (28), la prise d'alimentation du dispositif (29) et les roues mobiles (30) ;
et le procédé étant **caractérisé par** les étapes suivantes:
a) nettoyage d'un circuit à inspecter, suivi d'une étape d'inspection si aucune anomalie n'est constatée, ni fuite, ni colmatage ;
b) ajustement d'une valeur de pression à un réglage d'essai d'inspection ;
c) contrôle des valeurs de pression et de débit d'un fluide circulant à l'intérieur du circuit ;
d) acquisition des signaux reçus par les capteurs du dispositif et enregistrés dans une base de données ;
e) traitement de l'information ;
f) génération automatique et en temps réel d'un rapport.

2. Procédé selon la revendication 1, dans lequel le fluide circule librement à l'intérieur du circuit.
